# DEMANDE DE BREVET EUROPEEN

(11) **EP 0 949 213 A1**
(43) Date de publication de la demande: **13.10.1999**
(21) Numéro de dépôt: 99400545.2
(22) Date de dépôt: 08.03.1999
(51) Int. Cl.: C03B 37/018

(54) **Procédé amélioré de rétreint d'une préforme de fibre optique**

(30) Priorité: 30.03.1998 FR 9803896
(71) Demandeur: ALCATEL, 75008 Paris (FR)
(72) Inventeur: Rousseau, Jean-Claude, 78400 Chatou (FR); Sauvageon, Raphaelle, 74230 Thones (FR)
(74) Mandataire: Doressamy, Clarisse

(57) **Abrégé**

On dispose sur un tour verrier (1) une préforme (3) de forme tubulaire avec un coeur en silice dopée pour la mettre en rotation autour d'un axe (A), on déplace un chalumeau (9) parallèlement à l'axe devant la préforme pour la rétrécir et la fermer en plusieurs passes, et on injecte, lors d'une passe d'attaque, un mélange d'oxygène et d'un gaz précurseur de fluor par une extrémité (3A) de la préforme incomplètement fermée pour éliminer une certaine couche du coeur.

Lors de la passe d'attaque, on détermine une certaine valeur de la pression du mélange gazeux à ladite extrémité (3A) de la préforme (3) et on asservit en vitesse le déplacement du chalumeau (9) à ladite valeur de pression.

L'asservissement en vitesse du déplacement du chalumeau permet de stabiliser la pression du mélange gazeux à l'intérieur de la préforme, d'où il résulte une homogénéité longitudinale du diamètre de coeur et de l'écart d'indice de réfraction par rapport à une gaine optique entourant le coeur.

## Description

L'invention se rapporte à un procédé pour rétreindre une préforme de fibre optique de forme tubulaire avec un coeur en silice dopée, dans lequel on dispose la préforme sur un tour verrier pour la mettre en rotation autour d'un axe, on déplace un chalumeau parallèlement à l'axe devant la préforme pour la rétrécir et la fermer en plusieurs passes, et on injecte, lors d'une passe d'attaque, un mélange d'oxygène et d'un gaz précurseur de fluor par une extrémité de la préforme incomplètement fermée pour éliminer une certaine couche du coeur.

De manière connue, la préforme est fabriquée à partir d'un tube de silice à l'intérieur duquel on dépose en phase vapeur des couches de silice non dopée pour former une gaine optique puis des couches de silice dopée par exemple au germanium pour former le coeur. L'épaisseur des couches de silice dopée ainsi que la quantité d'élément dopant déterminent le diamètre du coeur et l'écart d'indice de réfraction par rapport à la gaine optique.

L'opération de rétreint consiste à diminuer progressivement le diamètre de la préforme jusqu'à une fermeture du tube en un barreau plein. On déplace le chalumeau en plusieurs passes devant la préforme en rotation sur elle même pour ramollir la silice et rétrécir le tube tout en conservant la circularité de la préforme.

Le rétreint de la préforme tubulaire jusqu'à sa fermeture s'accompagne inévitablement d'un appauvrissement de la couche la plus intérieure du coeur en germanium, qui s'évapore sous l'action de la température élevée qui règne à l'intérieur de la préforme chauffée par le chalumeau. Cette couche de coeur sous dopée en germanium est également polluée par des impuretés apportées lors du dépôt en phase vapeur. Il en résulte une diminution de l'écart d'indice de réfraction par rapport à la gaine optique qui affecte les propriétés de propagation de la lumière dans la fibre optique étirée à partir de la préforme.

Pour éliminer la couche de coeur sous dopée en germanium, on a recours à une attaque chimique décrite par exemple dans l'article intitulé "MCVD Preform Central Dip Reduction by Collapse Under Fluorinated Atmosphere" publié en 1982 par "Journal of Non Crystalline Solids, 47(2)". Le gaz précurseur du fluor, à l'exemple du tétrafluorure de carbone CF₄, de l'hexafluorure de soufre SF₆, ou encore du diclhorofluorométhane CF₂Cl_{2,} est injecté à l'intérieur de la préforme incomplètement fermée pour être décomposé en présence de la silice et sous l'action de la température, avec dégagement gazeux de tétrafluorure de silicium SiF₄. La réaction de décomposition est décrite notamment dans l'article intitulé "Fluorine Doping and Etching Reactions of Freon 12 in Optical Fibre Manufacture" publié en 1986 par "Journal of Lightwave Technology, Vol. 4, No. 7". L'élimination de la passe d'attaque permet de restaurer le profil d'indice de réfraction obtenu à l'issue du dépôt des couches de gaine et de coeur de la préforme.

Par une analyse cartographique de la préforme rétreinte selon le procédé décrit précédemment, on relève dans la direction axiale de la préforme des variations du diamètre du coeur ainsi que des variations de l'écart d'indice par rapport à la gaine optique, qui s'interprètent comme une dégradation de l'homogénéité longitudinale de la préforme due à l'attaque chimique.

Le but de l'invention est palier un tel inconvénient en permettant de garantir un diamètre de coeur et un écart d'indice par rapport à la gaine optique sensiblement constants dans la direction longitudinale de la préforme.

A cet effet, l'invention a pour objet un procédé pour rétreindre une préforme de fibre optique de forme tubulaire avec un coeur en silice dopée, dans lequel on dispose la préforme sur un tour verrier pour la mettre en rotation autour d'un axe, on déplace un chalumeau parallèlement à l'axe devant la préforme pour la rétrécir et la fermer en plusieurs passes, et on injecte, lors d'une passe d'attaque, un mélange d'oxygène et d'un gaz précurseur de fluor par une extrémité de la préforme incomplètement fermée pour éliminer une certaine couche du coeur, caractérisé en ce que, lors de la passe d'attaque, on détermine une certaine valeur de la pression du mélange gazeux à ladite extrémité de la préforme et on asservit en vitesse le déplacement du chalumeau à ladite valeur de pression.

L'asservissement en vitesse du déplacement du chalumeau permet de stabiliser la pression du mélange gazeux à l'intérieur de la préforme. Après la passe de fermeture, la préforme est étirée en une fibre optique dont on teste les propriétés de propagation selon une méthode de rétrodiffusion. Par différence avec une fibre optique étirée à partir d'une préforme rétreinte en l'absence de l'asservissement, on observe dans la direction longitudinale de la fibre, une diminution des variations de puissance lumineuse réfléchies autour d'une puissance réfléchie moyenne, ce qui traduit une diminution des variations du diamètre de coeur et une diminution des variations de l'écart d'indice de réfraction avec la gaine optique.

L'invention a également pour objet un procédé pour rétreindre une préforme de fibre optique de forme tubulaire avec un coeur en silice dopée, dans lequel on dispose la préforme sur un tour verrier pour la mettre en rotation autour d'un axe, on déplace un chalumeau parallèlement à l'axe devant la préforme pour la rétrécir et la fermer en plusieurs passes, et on injecte, lors d'une passe d'attaque, un mélange d'oxygène et d'un gaz précurseur de fluor par une extrémité de la préforme incomplètement fermée pour éliminer une certaine couche du coeur, caractérisé en ce que, lors de la passe d'attaque, on détermine une certaine valeur de la pression du mélange gazeux à ladite extrémité de la préforme et on asservit en débit l'injection du mélange gazeux.

L'asservissement en débit de l'injection permet également de stabiliser la pression du mélange gazeux à l'intérieur de la préforme.

Selon un premier avantage de l'invention, l'asservissement en vitesse ou en débit est linéaire par rapport à la valeur de pression.

Selon un deuxième avantage de l'invention, l'asservissement en vitesse ou en débit est linéaire par rapport à une variation de la valeur de pression.

Selon un troisième avantage de l'invention, on détermine la valeur de la pression en fonction de l'épaisseur de la couche sous dopée en germanium qui doit être éliminée lors de la passe d'attaque.

Selon un quatrième avantage de l'invention, le procédé s'applique à tout type de profil d'indice de réfraction, en triangle, en trapèze, en courbe gaussienne, ou encore en saut.

D'autres caractéristiques et avantages de l'invention apparaîtront à la lecture de la description d'un mode de réalisation de l'invention illustrés par les dessins.

La figure 1 montre schématiquement un dispositif pour la mise en oeuvre d'un procédé selon l'invention.

La figure 2 montre une courbe de rétrodiffusion obtenue sur une fibre optique étirée à partir d'une préforme dont le rétreint a été effectué sans asservissement.

La figure 3 montre une courbe de rétrodiffusion obtenue sur une fibre optique étirée à partir d'une préforme dont le rétreint a été effectué avec un asservissement conforme à l'invention.

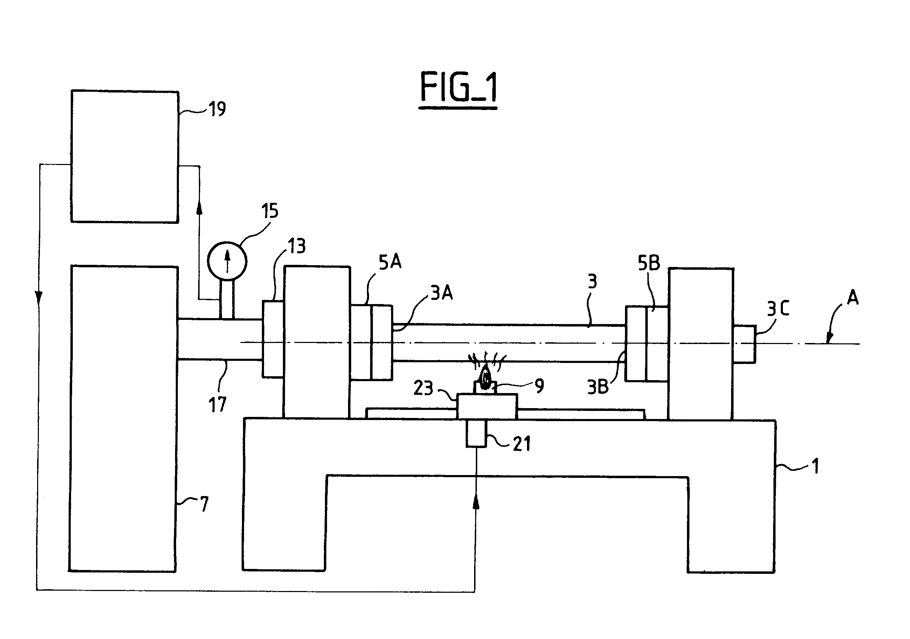

Un procédé pour rétreindre une préforme de fibre optique est mis en oeuvre par un dispositif qui comprend, figure 1, un tour verrier 1 qui entraîne la préforme 3 en rotation autour d'un axe A par l'intermédiaire de deux mandrins 5A et 5B.

La préforme est fabriquée par dépôt chimique en phase vapeur du type MCVD à partir d'un tube de silice. Une centrale à gaz 7 injecte à l'intérieur du tube de silice de l'oxygène O₂ qui est chargé de vapeurs de composés tels le tétrachlorure de silicium SiCl₄ et le tétrachlorure de germanium GeCl₄. Un chalumeau 9 chauffe le tube de silice en se déplaçant en translation parallèlement à l'axe A dans un même sens que l'écoulement des composés gazeux et qui, sur la figure 1, va de l'extrémité 3A serrée dans le mandrin 5A vers l'extrémité 3B serré par le mandrin 5B. Lorsqu'il arrive à proximité de l'extrémité 3B, le chalumeau 9 revient rapidement à son point de départ pour recommencer une nouvelle passe.

La communication entre la centrale à gaz 7 et la préforme 3 est assurée à une extrémité 3A par un joint tournant 13.

Le chalumeau 9 fournit une énergie thermique nécessaire au dépôt des composés gazeux à l'intérieur du tube de verre. Dans la zone de chauffe la plus proche du chalumeau 9, les composés gazeux réagissent en formant des particules qui se déposent ensuite sur la paroi interne du tube de silice 3 en aval du chalumeau 9 dans le sens d'écoulement des gaz. Les particules déposées sont vitrifiées par le chalumeau 9 au cours de son déplacement le long du tube de silice 3.

A la fin du dépôt, la préforme 3 comprend une gaine formée des premières couches déposées et un coeur formées des dernières couches déposées. La centrale à gaz 7 est alors mise en évent ou en purge pour ce qui concerne les produits halogénés SiCl₄ et GeCl₄.

L'opération de rétreint de la préforme 3 commence, au cours de laquelle le chalumeau 9 élève sa température de façon à ramollir la silice et à provoquer un rétrécissement. Le chalumeau est déplacé parallèlement à l'axe A en plusieurs passes jusqu'à obtenir la fermeture de préforme en un barreau plein. Une dernière passe permet de polir la surface latérale de la préforme, qui pourra être éventuellement rechargée.

Comme indiqué précédemment, lors des passes de rétreint le germanium contenu dans le coeur a tendance à s'évaporer de la couche formant la paroi intérieure de la préforme. Pour éliminer cette couche sous dopée on procède à une attaque chimique, alors que la préforme n'est pas complètement fermée. On injecte un mélange d'oxygène et d'un gaz précurseur du fluor à l'intérieur de la préforme 3 par une extrémité 3A par l'intermédiaire du joint tournant 13. L'armoire à gaz 7 fournit l'oxygène et le gaz précurseur du fluor, par exemple le tétrafluorure de carbone CF₄ ou l'hexafluorure de soufre SF₆, ou encore le composé C₂F₆.

De même que pour le dépôt de la gaine optique et du coeur, l'écoulement des gaz s'effectue de l'extrémité d'injection 3A vers l'extrémité opposée 3B qui débouche 3C sur l'air ambiant.

Selon l'invention, lors de la passe d'attaque, on détermine une certaine valeur de la pression du mélange gazeux à l'extrémité de la préforme où a lieu l'injection et on asservit en vitesse le déplacement du chalumeau à ladite valeur de pression.

Figure 1, un capteur de pression 15 est monté en communication avec une arrivée 17 des gaz du côté de l'extrémité d'injection 3A de la préforme 3. Le signal de pression instantanée délivré par le capteur 15 est envoyé sur une unité d'asservissement 19 qui le traite selon une certaine loi programmée pour le transformer en un signal de commande d'un moteur électrique 21 monté sur un chariot 23 de déplacement du chalumeau 9. De cette façon, une variation de la valeur de pression déterminée à l'extrémité d'injection du mélange gazeux à l'intérieur de la préforme 3 est convertie par l'unité d'asservissement 19 en une variation de la vitesse de déplacement du chalumeau 9.

Il est prévu d'utiliser une loi d'asservissement linéaire par rapport à la valeur de pression déterminée par le capteur. Une augmentation de la pression entraîne une augmentation de la vitesse de déplacement du chalumeau. Il est également prévu d'utiliser une loi linéaire par rapport la dérivée temporelle de valeur de pression, ce qui permet d'anticiper les variations et par conséquent s'asservir la vitesse de déplacement du chalumeau avec un temps de réponse plus court.

Selon un autre mode de réalisation de l'invention, lors de la passe d'attaque chimique, on asservit à la valeur de la pression le débit d'injection du mélange gazeux à l'intérieur de la préforme. Le signal délivré par le capteur de pression est envoyé vers l'unité d'asservissement où il est traité et transformé en un signal de commande d'une pompe de l'armoire à gaz débitant l'oxygène et le gaz précurseur du fluor dans le conduit d'arrivée.

L'asservissement en vitesse du déplacement du chalumeau permet de stabiliser la pression à l'intérieur de la préforme lors de la passe d'attaque chimique. L'unité d'asservissement est programmée avec une loi linéaire qui entraîne une diminution du débit d'injection lorsque le capteur de pression détecte une augmentation de la pression.

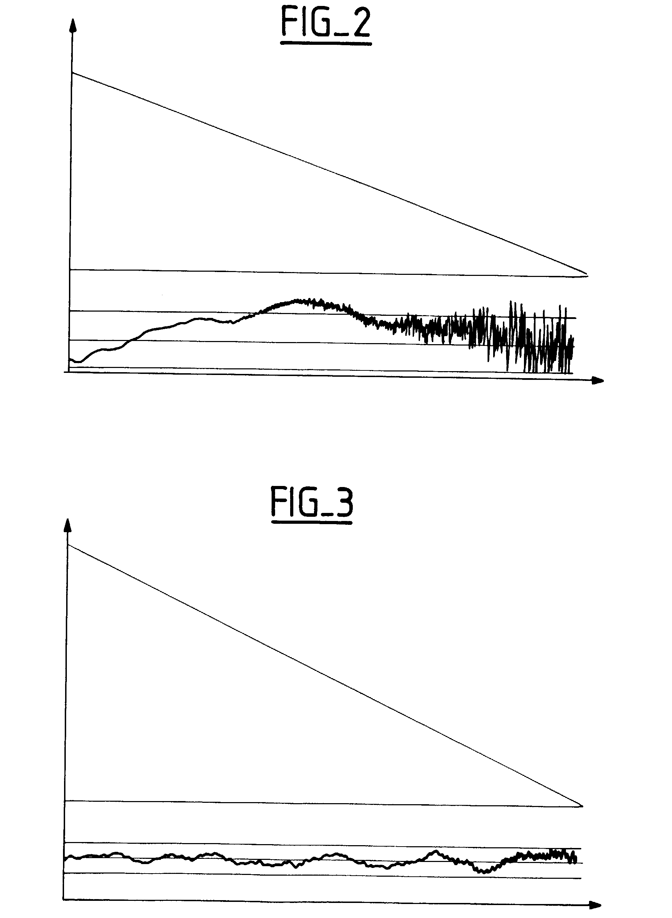

Les figures 2 et 3 montrent des courbes de rétrodiffusion obtenues sur une fibre optique étirée à partir d'une préforme dont le rétreint a été effectué, figure 2, sans asservissement et, figure 3, avec un asservissement linéaire de la vitesse de déplacement du chalumeau à la valeur de pression.

Sur chaque figure, on a représenté l'évolution de la rétrodiffusion de la fibre optique en fonction d'une même longueur en kilomètre (km). En ordonnée est portée en décibel (dB) la puissance lumineuse réfléchie rapportée à une puissance lumineuse émise à une longueur d'onde de 1550 nanomètres (nm). La courbe supérieure de chaque figure représente une évolution moyenne tandis que la courbe inférieure représente des variations locales de rétrodiffusion par rapport à la moyenne.

On observe par comparaison entre les deux figures, une diminution des variations locales de la rétrodiffusion de la fibre optique étirée à partir de la préforme rétreinte selon l'invention. Figure 3, l'amplitude des variations locales est limitée en plus ou en moins à 0,05 dB, alors que les variations locales représentées à la figure 2 sont supérieures à cette valeur. D'autres résultats expérimentaux obtenus conformément à l'invention font état de variations locales de la puissance lumineuse rétrodiffusée inférieures à 0,05 dB en valeur absolue.

Un procédé selon l'invention conduit à une préforme qui possède un diamètre de coeur et un écart d'indice de réfraction par rapport à la gaine optique sensiblement constants selon la direction longitudinale. Cette homogénéité longitudinale confère à une fibre optique étirée à partir de la préforme une homogénéité le long de l'axe de la fibre, de champ de mode, de longueur d'onde de coupure, et de longueur d'onde d'annulation de la dispersion chromatique.

L'invention s'applique avantageusement à une préforme présentant tout type de profil d'indice de réfraction, triangle, ou trapèze, ou en courbe gaussienne, ou en saut d'indice.

## Revendications

1. Un procédé pour rétreindre une préforme de fibre optique de forme tubulaire avec un coeur en silice dopée, dans lequel on dispose la préforme (3) sur un tour verrier (1) pour la mettre en rotation autour d'un axe (A), on déplace un chalumeau (9) parallèlement à l'axe devant la préforme pour la rétrécir et la fermer en plusieurs passes, et on injecte, lors d'une passe d'attaque, un mélange d'oxygène et d'un gaz précurseur de fluor par une extrémité (3A) de la préforme incomplètement fermée pour éliminer une certaine couche du coeur, caractérisé en ce que, lors de la passe d'attaque, on détermine une certaine valeur de la pression du mélange gazeux à ladite extrémité (3A) de la préforme (3) et on asservit en vitesse le déplacement du chalumeau (9) à ladite valeur de pression.

2. Un procédé pour rétreindre une préforme de fibre optique de forme tubulaire avec un coeur en silice dopée, dans lequel on dispose la préforme (3) sur un tour verrier (1) pour la mettre en rotation autour d'un axe (A), on déplace un chalumeau (9) parallèlement à l'axe devant la préforme pour la rétrécir et la fermer en plusieurs passes, et on injecte, lors d'une passe d'attaque, un mélange d'oxygène et d'un gaz précurseur de fluor par une extrémité (3A) de la préforme incomplètement fermée pour éliminer une certaine couche du coeur, caractérisé en ce que, lors de la passe d'attaque, on détermine une certaine valeur de la pression du mélange gazeux à ladite extrémité (3A) de la préforme (3) et on asservit en débit l'injection du mélange gazeux.

3. Un procédé selon la revendication 1 ou 2, dans lequel l'asservissement en vitesse ou en débit est linéaire par rapport à la valeur de pression.

4. Un procédé selon la revendication 1 ou 2,dans lequel l'asservissement en vitesse ou en débit est linéaire par rapport à une variation de la valeur de pression.
